(19) **Europäisches Patentamt**

**European Patent Office**

**Office européen des brevets**

(11) **EP 0 893 027 B1**

(12) **EUROPEAN PATENT SPECIFICATION**

(45) Date of publication and mention
of the grant of the patent:
**25.08.2004 Bulletin 2004/35**

(51) Int Cl.$^7$: **H04N 7/26**, H04N 7/58

(86) International application number:
**PCT/US1997/005971**

(21) Application number: **97920313.0**

(22) Date of filing: **10.04.1997**

(87) International publication number:
**WO 1997/039584 (23.10.1997 Gazette 1997/45)**

(54) **Compressed-video distribution system having a statistical multiplexer with transcoders**

System zur Verteilung komprimierter Videosignale, mit statistischem Multiplexer mit Transkodierern

Système de distribution de vidéo comprimé, ayant un multiplexeur statistique avec des transcodeurs

(84) Designated Contracting States:
**BE DE FR GB LU NL**

(30) Priority: **12.04.1996 US 631084**

(43) Date of publication of application:
**27.01.1999 Bulletin 1999/04**

(73) Proprietor: **Imedia Corporation**
**San Francisco, CA 94107 (US)**

(72) Inventors:
• **KRAUSE, Edward, A.**
**San Mateo, CA 94402 (US)**
• **SHEN, Paul**
**San Francisco, CA 94109 (US)**

(74) Representative: **Fiener, Josef et al**
**Patentanw. J. Fiener et col.**
**Postfach 12 49**
**87712 Mindelheim (DE)**

(56) References cited:

| | |
|---|---|
| **EP-A- 0 637 893** | **EP-A- 0 680 221** |
| **EP-A- 0 682 454** | **EP-A- 0 685 971** |
| **EP-A- 0 690 392** | **WO-A-95/29561** |
| **US-A- 5 216 503** | **US-A- 5 319 707** |

**Description**

**BACKGROUND OF THE INVENTION**

**1. Field of the Invention**

The present invention generally relates to the encoding and distribution of compressed video programs. More particularly, the present invention relates to varying the compression ratio of digitally encoded video.

**2. Background**

The present invention relates to the encoding and distribution of compressed video programs. It is particularly suitable for use with a video compression technique known as *variable bit-rate (VBR) encoding* (c.f. EP-A-0 685 971). VBR encoding can be used to overcome the well-known problem of most video compression encoders where the image quality tends to vary as a function of image complexity. Typically, a video program will contain a variety of scenes. Many of these scenes are lacking in motion or detail and are therefore easily compressed, while many other scenes contain complex details which are generally more difficult to compress, particularly when there is complex or random motion. Therefore, unless the available bandwidth is very high, the perceived quality of the decompressed and reconstructed images will tend to vary from one scene to the next. This problem becomes more serious as the available bandwidth is reduced until, eventually, the video quality becomes unacceptable, often because of just a few problem scenes.

VBR encoding overcomes this problem by allocating more bits to those scenes which are difficult to compress and fewer bits to those scenes which are more easily compressed. In this way the decompressed and reconstructed images can be made to appear consistently uniform in quality, and therefore superior to the reconstructed images derived from a constant bit-rate (CBR) encoder adjusted for the same average rate of compression. As a result, it is possible to compress a video program more efficiently when using the VBR encoding technique. This not only increases the number and variety of programs or program streams that can be delivered over a communications channel of a given capacity, but also reduces the storage capacity requirements at the head end or other site where the program library is maintained.

A disadvantage of the VBR encoding technique is that it makes it difficult to manipulate or edit a compressed data stream. In particular, it is difficult to efficiently utilize a fixed-capacity communication channel since the variable bit-rate stream may at times exceed the capacity of the channel, while at other times, it may utilize only a fraction of the available channel capacity.

One known technique that is used to alleviate this problem is to buffer the compressed bit stream at the transmission end of the communication channel in order to convert the variable bit-rate stream to a constant bit-rate stream. With this technique it is also necessary to buffer the signal received at the receiving end of the channel in order to recover the variable rate stream that is necessary for proper timing of the reconstructed video images. Unfortunately, the required amount of buffering for VBR-encoded streams would be prohibitively expensive and would introduce long delays into the distribution system. Moreover, existing video compression standards such as the Motion Picture Experts Group (MPEG) standards, a set of International Organization for Standardization/International Electrotechnical Commission (ISO/IEC) standards, specify limits on the amount of buffering needed for conforming decoders. Therefore, it is important that the received bit streams be decodable without exceeding these limits. MPEG is documented in ISO/IEC publications 11172 and 13818, respectively known as the MPEG-1 and MPEG-2 standards. As used hereafter, "MPEG" will be understood to refer to either MPEG-1 or MPEG-2.

One method of sending a VBR stream over a fixed-capacity channel is to convert the VBR stream to a CBR stream, where the CBR rate is at least as high as the peak variable rate. This can result in a very low channel utilization depending on the variance of the data rate. A technique that can be used to reduce the inefficiency of transmitting VBR encoded (and non-VBR encoded) programs over a fixed-capacity channel is to combine a plurality of program streams into a single multiplex. It is better to multiplex several VBR streams together and then convert the multiplex to a constant data rate than to individually convert each single stream to a constant data rate. Although each additional program stream will increase the overall data rate of the multiplex, the variance of the average per stream data rate of this multiplex will tend to decrease in approximate proportion to the number of program streams, assuming approximate statistical independence of the programs. Therefore, if the channel data rate is significantly greater than the average rate of a single program stream, then a large number of program streams can be combined and hence, the channel utilization can be significantly improved. This technique is known in the art as *statistical multiplexing* (c.f. EP-A-0 685 971).

One method of assuring that buffer overflow does not occur when using buffering is to add feedback between the encoder buffer and the encoder (c.f. EP-A-0 680 221). When the buffer approaches a full state, a buffer fullness signal from the buffer informs the encoder to increase the compression ratio so that the buffer does not overflow. When the buffer has more room, the feedback signal from the buffer to the encoder enables the encoder to reduce the compression ratio in order to maximize image quality. Such a feedback mechanism is particularly effective when combined with statistical multiplexing. Individual buffers may be provided at the output of each encoder before the inputs to the multiplexer, or a single buffer may be provided at the output of the multiplexer. In either case, a feedback signal, indicative of the level of fullness of the single buffer or the overall combined level of fullness of the individual buffers, is supplied as an input to each of the encoders. By adjusting the compression ratio as a function of the total data rate produced by the plurality of encoders, it becomes possible to reduce the size and frequency of the compression ratio adjustments.

The combination of encoder buffering with statistical multiplexing of multiple encoded program streams over fixed-capacity channels can be effective, but cannot always be applied. There are some situations where no feedback is possible between the output buffer(s) and the individual encoders. One such situation occurs when multiplexing *already encoded* data streams. Another occurs when the encoders are located in an area physically remote from the multiplexer. Both of these situations are referred to herein as *remote encoding,* indicating that encoding and multiplexing are carried out at separate times or places so that no feedback is possible from the multiplexer to the encoders of the program streams to be multiplexed.

The problem of matching the data rate of encoded programs to the maximum data rate of a broadcast channel is not limited to statistical multiplexing of multiple VBR-encoded programs. For example, a single program may be initially encoded at a first constant data rate (CBR) for distribution over a fixed-bandwidth channel. Then, if the compressed program is to be received at a particular location and subsequently redistributed over a second fixed-bandwidth channel, where the bandwidth of the second channel is less than that of the first, the data rate of the compressed program will need to be reduced. This is necessary to avoid exceeding the second constant data rate corresponding to the bandwidth of the second channel.

For this purpose it is known to use transcoders, such as disclosed in WO-A-95/29561, EP-A-0 637 893, EP-A-0 682 454, EP-A-0 690 392.

## SUMMARY OF THE INVENTION

From the foregoing, it can be appreciated that it is desirable to provide a mechanism for matching the data rate of encoded video programs as closely as possible to a maximum data rate of a subsequent broadcast channel. The present invention introduces a system as defined in claim 1, providing a compressed-video head-end distribution system, wherein in one aspect of the present invention the data rate corresponding to one or more, e.g. CBR or VBR, data streams is reduced in order to avoid exceeding the maximum data rate of a subsequent fixed-bandwidth channel. In a second aspect of the present invention, the data rate corresponding to one or more, e.g. CBR or VBR, data streams is adjusted to deliver constant picture quality where the level of quality can be specified to satisfy the requirements of a particular application.

In the system according to claim 1 a compressed video program at a first data rate is translated to a second data rate in order to accommodate a channel bandwidth. A first, independent-component mechanism for varying the compression ratio of the digitally encoded video program may utilize independent decoder and encoder components: The received video program at the first data rate is processed by an independent compressed video decoder wherein the compressed video program is decoded. The decoded program is then encoded by a subsequent independent video encoder with the compression ratio adjusted in accordance with the desired output data rate.

The independent decoder/encoder reencoder system utilizing independent decoding and encoding, while effective, is an inelegant, expensive approach to varying the compression ratio of a compressed video program. In accordance with additional aspects of the present invention, exemplary reencoder systems, described for use with the MPEG compression standards, introduce successive improvements to the de-coupled component reencoder system. In a first improved aspect, it is recognized that header information and motion vectors in the recompressed video program may be identical to the header information and motion vectors received at the first compression rate. In such a case the header information and motion vectors are said to be static information, information that does not change during the reencoding process. Thus, a header forwarding path is introduced, coupling the decoder and encoder portions of the reencoder system during compression. This reduces the data processing required by the encoder portion of the system and eliminates header calculation circuitry from the encoder. Logic is introduced for recognizing the header information at the decoder and forwarding it to the encoder and with additional logic for reinserting the header information into the outgoing compressed bit stream.

A significant aspect of the present invention is a decoder/encoder combination suitable for use with MPEG compression techniques which is capable of utilizing only a single shared motion compensator. A significant portion of the cost associated with the independent decoder/encoder method is the memory components required by separate motion compensators for each stage. The improved reencoder system utilizes a shared motion compensator in a tightly coupled arrangement operating in a manner to adequately support both the decoding function and the reencoding function of the reencoder system while eliminating the expense and hardware required for a second motion compensator.

In accordance with another aspect a reencoder system utilizing a shared motion compensator is taught wherein predictor subtraction is carried out in the DCT domain. In the MPEG implementation of this aspect of the present invention, an inverse discrete cosine transform (IDCT) unit is eliminated from the composite system, thus again reducing the cost and complexity of the reencoder system.

In accordance with the present invention the composite reencoder system utilizing the shared motion compensator may be implemented in a manner to ensure a constant picture quality by varying the compression ratio in accordance with certain properties of a stream being recompressed. This may be done by specifying a fixed quality desired and adjusting a parameter to the quantizer used for recompressing the encoded video data.

The present invention is realized by a statistical multiplexer which utilizes several of the composite reencoders of the present invention. The statistical multiplexer receives numerous compressed data streams at a first data rate and combine them into a data stream multiplex. The statistical multiplexer system may vary the compression ratios of the outputs of the reencoders by measuring a buffer depth associated with the generated data stream multiplex.

In accordance with the present invention, a system architecture is introduced for a satellite uplink and cable distribution in which a head-end utilizes the statistical multiplexing techniques which incorporate the composite reencoder system of the present invention. Such a system would allow selected components of one or more statistical multiplexers of compressed video received from the satellite downlink to be recombined into different statistical multiplex combinations for distribution through a cable system.

## BRIEF DESCRIPTION OF THE DRAWINGS

The objects, features and advantages of the present invention will be apparent from the following detailed description, in which:

Figure 1 illustrates a block diagram of a compressed video reencoder system utilizing independent decoder and encoder elements.

Figure 2 illustrates a compressed video reencoder system in which header and subheader information forwarding between a decoder component and an encoder component is implemented.

Figure 3 illustrates a flow diagram of the logic responsible for detecting and forwarding header and subheader information in accordance with the reencoder system of Figure 2.

Figure 4 illustrates a flow diagram of the logic for inserting forwarded header and subheader information into a compressed video output data stream.

Figure 5 illustrates a block diagram of a portion of a compressed video motion compensator circuit demonstrating the interactions of the frame memories incorporated therein.

Figure 6 illustrates a compressed video program reencoder system implementing both header/subheader forwarding and a shared motion compensator architecture for use with one embodiment of the present invention.

Figure 7 illustrates an alternative reencoder system implementing header/subheader forwarding and a shared motion compensator architecture.

Figure 8 illustrates a block diagram of a quantizer for use in the reencoder system of the present invention for controlling the compression ratio of a compressed video output data stream.

Figure 9 illustrates a statistical multiplexer system which implements reencoder systems in accordance with the present invention.

Figure 10 illustrates a system architecture for a compressed video distribution system, including a satellite uplink system and a cable distribution system head end which may incorporate the reencoder system of the present invention.

Figures 11A - 11D are used to illustrate a proof that the single shared motion compensator of the present invention can replace multiple motion compensators from other configurations.

## DETAILED DESCRIPTION OF THE INVENTION

A method and apparatus are disclosed for modifying the compression ratio of digitally encoded video programs in a compressed video distribution system. Although the present invention is described predominantly in terms of compression techniques for video information encoded in accordance with the MPEG standard, the concepts and methods are broad enough to encompass video compression systems using other techniques. The present invention is applicable to both constant bit rate (CBR) and variable bit rate (VBR) encoded data streams. Throughout this detailed description, numerous specific details are set forth such as quantization levels and frame types, etc. in order to provide a thorough understanding of the present invention. To one skilled in the art, however, it will be understood that the present invention may be practiced without such specific details. In other instances, well-known control structures and encoder/decoder circuit components have not been shown in detail in order not to obscure the present invention.

In many instances, components implemented within the present invention are described at an architectural, functional level. Many of the elements are well known structures, particularly those designated as relating to MPEG compression techniques.

Additionally, for logic to be included within the system of the present invention, flow diagrams are used in such a manner that those of ordinary skill in the art will be able to implement the particular methods without undue experimentation. It should also be understood that the techniques of the present invention may be implemented using numerous technologies. For example, the entire system could be implemented in software running on a computer system, or implemented in hardware via either a specially designed application specific integrated circuit (ASIC) or programmable logic devices. It will be understood by those skilled in the art that the present invention is not limited to any one particular implementation technique and those of ordinary skill in the art, once the functionality to be carried out by such components is described, will be able to implement the invention with various technologies without undue experimentation.

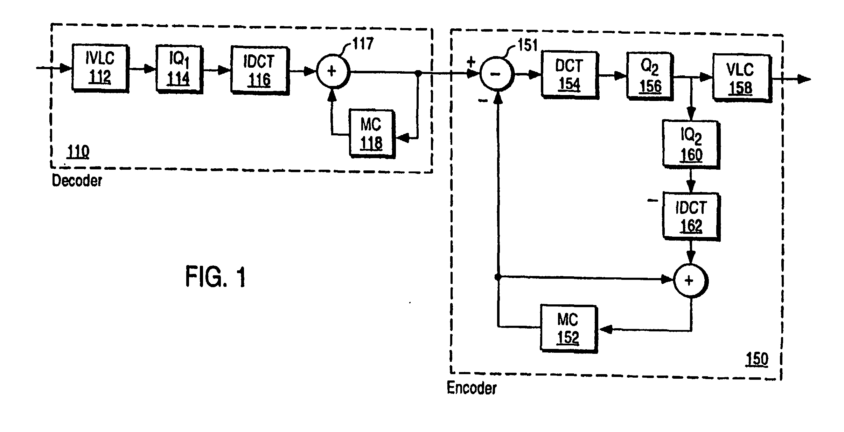

Referring now to Figure 1 there is shown a reencoder system that implements an independent decoder/encoder method for varying the data rate of an encoded video program stream from a first rate to a second rate in accordance with the first and second compression ratios, respectively. In this case, a compressed video program is *reencoded* by coupling a decoder 110 with an encoder 150. That is, the composite reencoder system first decodes the previously encoded video program and then encodes it once again, using a different compression ratio. In most cases, the different compression ratio will be higher, but in an alternative embodiment, a lower compression ratio may be used. In the system of Figure 1, both the decoder 110 and encoder 150 are compatible with the standards of the MPEG specifications. The decoder 110 first uses an Inverse-Variable-Length Coder (IVLC) 112 to translate variable-length codewords to quantized DCT coefficients. The quantized DCT coefficients are then processed by an Inverse Quantizer $(IQ_1)$ 114 and an Inverse Discrete Cosine Transformer (IDCT) 116 in order to recover the prediction errors corresponding to each pixel. The final decoding step is to reconstruct an approximation of the original pixels by summing the prediction errors at adder 117 and the pixel predictions provided by a Motion Compensator unit (MC) 118.

Once the data stream has been decoded and the pixels have been reconstructed, the image sequence can be compressed once again using a different compression ratio. The first step in the encoding process is to subtract the pixel predictions at subtractor 151 provided by a second Motion Compensator unit (MC) 152 from the reconstructed pixels to obtain a prediction error signal. This signal is then transformed by a Discrete Cosine Transform unit (DCT) 154 to a sequence of DCT coefficients, these coefficients are then quantized by Quantizer unit $(Q_2)$ 156, and finally, variable length codewords are assigned to the quantized DCT coefficients by the Variable Length Coder (VLC) 158. Additional encoder processing units, consisting of an Inverse Quantizer $(IQ_2)$ 160, an Inverse Discrete Cosine Transform Unit (IDCT) 162 and the Motion Compensator (MC) 152, are needed to duplicate the decoding process, thereby insuring that the same pixel predictions will be generated by this encoder 150 and all subsequent decoders as noted in the above-referenced ISO/IEC publication 13818-2. It will be understood that this architecture is necessary to maintain synchronization among MPEG encoders and decoders. In the embodiment described with respect to Figure 1, it should be recognized that the quantizer is a combination of a quantizer and a scaler. That is, the DCT coefficients are first quantized and then the quantized results are normalized by dividing by the size of the quantization step. Similarly, the inverse quantizers reverse the normalization by multiplying the quantized and scaled coefficients by the same quantization step size.

The compression ratio for the encoder 150 is determined by the quantizer $(Q_2)$ 156 and the VLC 158. The efficiency of the VLC 158 is determined by the amplitude and pattern of the quantized DCT coefficients and since the tables specifying the VLC are generally fixed, the VLC cannot be used to vary the compression rate. Instead, the precision of the quantizer is varied, either by increasing the precision to increase the coefficient amplitude and therefore the data rate, or by reducing the precision to reduce the coefficient amplitude and hence, the data rate. In this way, the data rate at the output of the encoder 150 can be made less than the data rate at the input of the decoder 110 by adjusting the quantization precision of $Q_2$ 156.

The disadvantage of the reencoder system of Figure 1 is its complexity and cost. Although decoders are becoming highly integrated and relatively inexpensive, encoders continue to remain complex and costly, not only because of smaller production quantities, but because of the computational complexity of the motion estimation process, and the need for complex algorithms to determine the best method of encoding to be used at various stages of the implementation. These steps are not required in the corresponding decoders.

One method of reducing the cost of the reencoder system of Figure 1 is to utilize some of the same information that was derived during the original encoding process. Information specifying the motion vectors and the decisions made during the original encoding process can be extracted from the compressed data stream. For example, the same motion vectors may be utilized during the encoding step of Figure 1, thereby eliminating the need for another motion estimation step. The same motion vectors as included in the original data stream may be utilized by the motion compensator (MC) 152 shown in the encoder 150 of Figure 1. In addition, certain encoding decisions, such as the choice of intra-coding, forward prediction, backward prediction, bi-directional prediction, no motion compensation, and field or frame coding, may all be omitted during the reencoder's encoding stage, and instead performed in accordance with the modes selected during the original encoding process. Information specifying the motion vectors and the decisions made during the original encoding process can be extracted from the compressed data stream.

The encoding stage of the reencoder can also be simplified by omitting the step of encoding the high-level formatting data. For instance, the MPEG standards specify a hierarchy of header and header extension layers, each consisting of a unique startcode followed by a series of fixed length and/or variable-length codewords. These headers and header extensions precede each frame of picture data and provide information that is needed for proper decoding of the picture data. Generally, these headers and header extensions would not need be modified during the reencoding process. In the case of MPEG, one exception is a codeword in each picture header that is sometimes used by decoders to maintain proper synchronization of their corresponding channel buffers. Since the reencoding process can change the number of bits used to represent each frame, this codeword must be adjusted to insure that the output bit stream remains fully compliant with the MPEG standard. However, this codeword is not needed and remains constant when using VBR encoding, and in this case no adjustment of the header and header extensions are necessary. More information about MPEG headers can be found at Section 6.2 of ISO/IEC Spec. 13818-2.

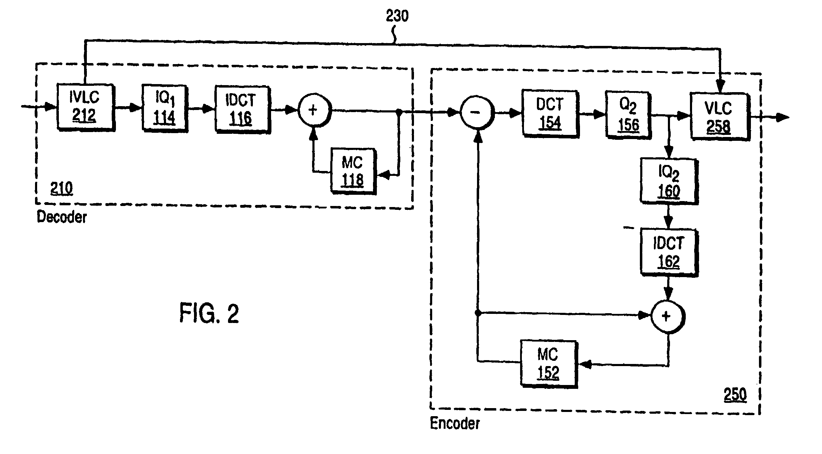

Referring now to Figure 2, there is illustrated a reencoder system incorporating the header (static information) forwarding aspect of the present invention. The reencoder system shown in Figure 2 includes a header forwarding path or bus 230 for forwarding a copy of the header and header extension layers to the output side of the encoder portion 250 from the input side of the decoder portion 210. For hardware implementations, either a serial or parallel data path may be used in combination with a delay device, such as a First-In-First-Out (FIFO) memory. The FIFO can be used to compensate for the processing delay between the decoder 210 and the encoder 250.

The inverse variable length coder (IVLC) 212 detects these header layers and routes them onto the forwarding path 230. At the output, the variable length coder (VLC) 258 inserts the pre-encoded header information into the output stream at the appropriate time.

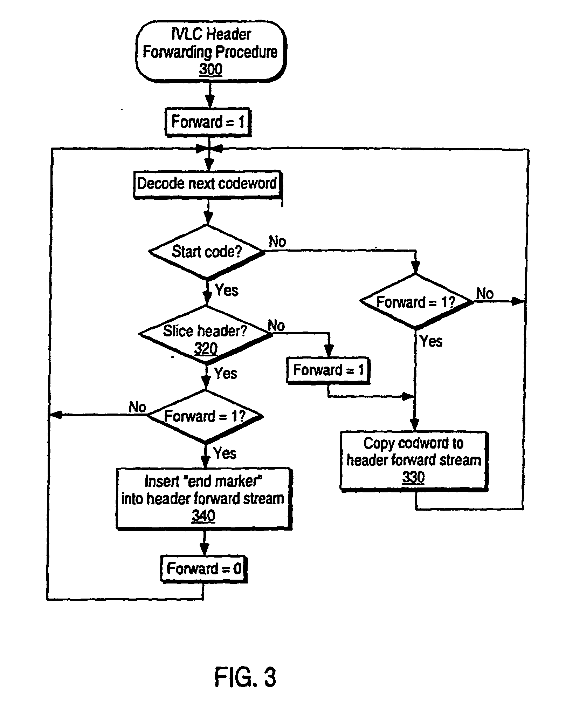

A flowchart describing the functions to be carried out by the logic to be incorporated into the IVLC 212 is shown in Figure 3 as the IVLC Header Forwarding Procedure 300. In the MPEG example, the end of the header and extension layers and the beginning of the encoded picture data is signaled by the detection of the first slice header. In accordance with one embodiment of the present invention, all data is initially routed to the header forwarding path 230 until the start code corresponding to the first slice header is detected at step 320. The modified IVLC 212 then inserts a unique 'end marker' code into the forwarded stream at step 340 so that this point will be easily detected by the receiving VLC unit 258. This unique end marker may be chosen to be one of the reserved start codes that are not used by any of the MPEG standards. All subsequent data is then processed internally by the decoder portion 210 and not copied onto the header forwarding path 230 until the detection of the next start code that is not part of a slice header. Such a start code will not be detected until all of the picture data has been received.

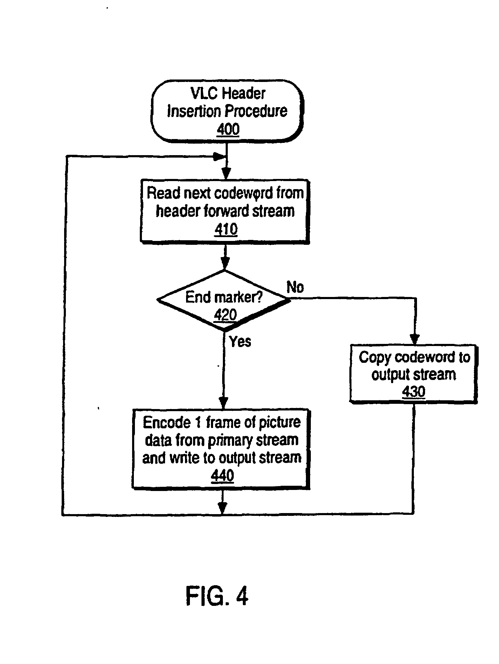

A flowchart describing the functions to be carried out by the logic incorporated into the corresponding VLC unit 258 is shown in Figure 4 as the VLC Header Insertion Procedure 400. The VLC 258 copies all data from the header forward path 230 to the output stream at step 430 until an end marker is detected at decision box 420. The end marker is then discarded and the VLC 258 begins to receive data from the primary stream at step 440. The VLC 258 continues to operate conventionally until the entire picture has been processed. After the picture is completed, the VLC 258 will again begin to accept data from the header forward path 230 at step 410 until another end marker is detected at decision box 420.

Although the functionality described with respect to Figures 3 and 4 is described as logic to be performed by circuitry incorporated into the IVLC 212 and VLC 258, respectively, it will be recognized by those of ordinary skill in the art that alternative embodiments may be implemented. For example, rather than incorporating logic for performing the functionality within the IVLC and VLC units, header detect and forward logic may be incorporated prior to the IVLC at the data receiving point for the decoder section 210. Similarly, header receipt and insertion logic may be incorporated external to the VLC unit for inserting the header information into the output data stream from the encoder section 250 of the composite reencoder system of Figure 2. In another alternative embodiment, rather than incorporating header receipt and insertion logic, a delay line may be incorporated into the header forwarding path 230 such that the forwarded header information is timed to be received and inserted into the output stream when it is needed for output from the reencoder system.

A significant portion of the cost of the reencoder system shown in Figure 2 is due to the memory components associated with each of the two motion compensators 118 and 152. Each motion compensator must contain at least one frame of storage if B-frames are not supported, and two frames of storage if B-frames are supported.

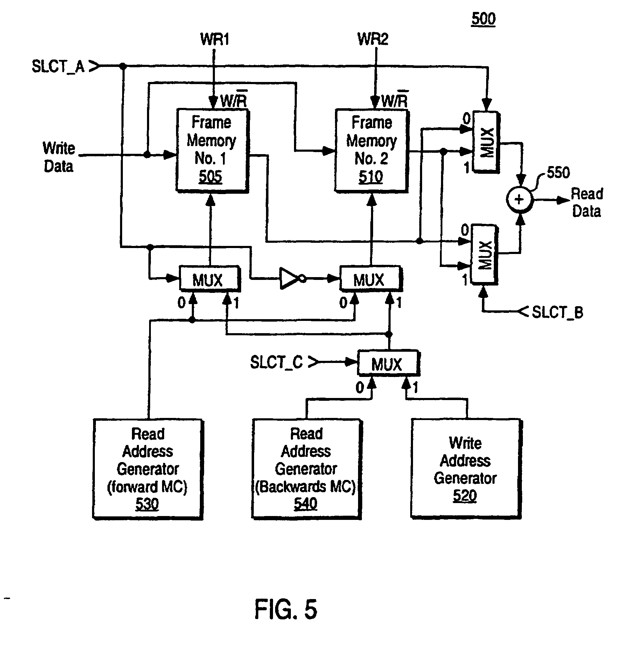

A simplified block diagram of a motion compensator 500 supporting B-frames is shown in Figure 5. The sequencing of the control signals, consisting of a Write/Read selector (WR1)for frame memory 1 (505), a Write/Read selector (WR2) for frame memory 2 (510), and multiplexer selector signals (SLCT_A, SLCT_B, and SLCT_C), is demonstrated in Table I below:

Table I:

| Motion Compensator Control Signals | | | | | | |
|---|---|---|---|---|---|---|
| Frame *Display Order* | Frame *Processing Order* | WR1 | WR2 | SLCT_A | SLCT_B | SLCT_C |
| $B_0$ | $I_2$ | 0 | 1 | 0 | 0 | 1 |
| $B_1$ | $B_0$ | 0 | 0 | 0 | 1 | 0 |
| $I_2$ | $B_1$ | 0 | 0 | 0 | 1 | 0 |
| $B_3$ | $P_5$ | 1 | 0 | 1 | 1 | 1 |
| $B_4$ | $B_3$ | 0 | 0 | 1 | 0 | 0 |
| $P_5$ | $B_4$ | 0 | 0 | 1 | 0 | 0 |
| $B_6$ | $P_8$ | 0 | 1 | 0 | 0 | 1 |
| $B_7$ | $B_6$ | 0 | 0 | 0 | 1 | 0 |
| $P_8$ | $B_7$ | 0 | 0 | 0 | 1 | 0 |
| $B_9$ | $P_{11}$ | 1 | 0 | 1 | 1 | 1 |
| $B_{10}$ | $B_9$ | 0 | 0 | 1 | 0 | 0 |
| $P_{11}$ | $B_{10}$ | 0 | 0 | 1 | 0 | 0 |
| $B_{12}$ | $P_{14}$ | 0 | 1 | 0 | 0 | 1 |
| $B_{13}$ | $B_{12}$ | 0 | 0 | 0 | 1 | 0 |
| $P_{14}$ | $B_{13}$ | 0 | 0 | 0 | 1 | 0 |
| $B_{15}$ | $I_{17}$ | 1 | 0 | 1 | 1 | 1 |
| $B_{16}$ | $B_{15}$ | 0 | 0 | 1 | 0 | 0 |
| $I_{17}$ | $B_{16}$ | 0 | 0 | 1 | 0 | 0 |
| $B_{18}$ | $P_{20}$ | 0 | 1 | 0 | 0 | 1 |
| $B_{19}$ | $B_{18}$ | 0 | 0 | 0 | 1 | 0 |
| $P_{20}$ | $B_{19}$ | 0 | 0 | 0 | 1 | 0 |

Frames which will be needed to predict other frames must be stored in one of the two frame memories. These frames are the I- and P-frames, since B-frames are never used for prediction. Therefore, only the I- and P-frames are transferred from the 'Write Data' port to one of the two frame memories. If the first of the two frame memories is selected for storing a particular I- or P-frame, then the second frame memory will be selected for storing the next I- or P-frame, and the selection will continue to toggle for each following I- or P-frame thereafter. Each arriving pixel is written to the location within the selected frame memory that is specified by the Write Address Generator 520. In this case, the addressing sequence is fixed and is synchronized with the sequence that the pixels are received at the Write Data port.

Motion compensation is performed during the process of reading data from the frame memories. When an I-frame is being processed, no prediction is necessary, and the output from the Read Data port of the motion compensator is discarded. When P-frames are received, forward prediction is performed using the frame memory containing the I- or P-frame that precedes the current frame. This frame memory is addressed by the first of the two Read Address Generators 530 using the motion vectors decoded from the received bit stream. This occurs at the same time that the incoming P-frame is written to the other frame memory under the control of the Write Address Generator 520.

When a B-frame is received, two frames are needed to generate a bi-directional prediction. In this case, the frame memory containing the preceding I- or P-frame is addressed by the first Read Address Generator 530, and the frame memory containing the following I- or P-frame is addressed by the second Read Address Generator 540. The Write Address Generator 520 is not used for B-frames, since B-frames are not used for prediction and therefore do not need to be stored.

The most frequent type of predictions used during B-frames are bi-directional. In this case, the forward prediction derived from the frame memory addressed by the first Read Address Generator 530 must be averaged with the backwards prediction derived from the other frame memory addressed by the second Read Address Generator 540. The control signals SLCT_A and SLCT_B will select the forward and backwards predictions, respectively, so that they may be averaged by the output adder 550.

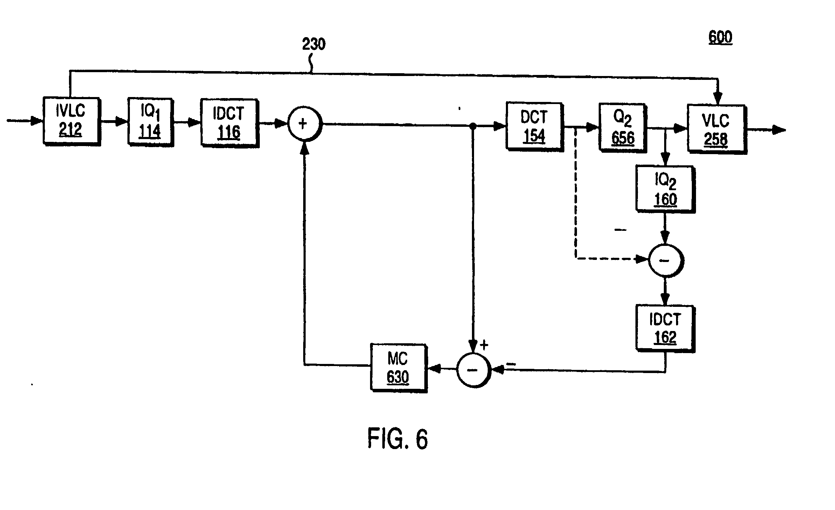

The reencoder system of Figure 2 may be constructed using only a single shared motion compensator instead of two independent motion compensators. The reencoder shown in Figure 6 utilizing only a single motion compensator 630 is functionally compatible as a substitute for the reencoder system of Figure 2. A proof supporting this novel and nonobvious replaceability is provided at the end of this detailed description.

In Figure 6, a single, shared motion compensator 630 outputs the difference between the individual predictions provided by the decoder and encoder units respectively, of the reencoder system shown in Figure 2. In this way, any errors due to the difference between the original quantization and the quantization performed by quantizer $Q_2$ 656 will be compensated for in all future frames which are either directly or indirectly derived from information in the current frame.

The shared motion compensator reencoder system shown in Figure 6 can be further simplified, but not without sacrificing an important advantage for some implementations in that the resulting reencoder could no longer be realized as an adaptation of an existing decoder architecture. The most complex portion of this structure is similar to a basic decoder. This means that a decoder may be adapted to this application by adding a DCT, an IDCT, a quantizer, an inverse quantizer, and a VLC, either in the same IC device or in one or more external devices. Ideally, the decoder would be modified to output a header forwarding stream directly to the VLC unit. The decoder could also be modified to accept its input to the motion compensator from an external subtractor, but this is not essential, since the subtractor could write its output directly into the motion compensator's frame memory. Recall that only the I- or P-frames need to be stored at the motion compensator, and during such frames only one of the two frame memories is used for prediction, hence leaving the second frame memory available to accept the new frame. Even in highly integrated implementations, the frame memories are generally assigned to separate IC packages. Note that as an alternative to performing the subtraction prior to the motion compensator 630, the subtraction may be performed prior to the IDCT 162. This case is illustrated by the dashed line in Figure 6.

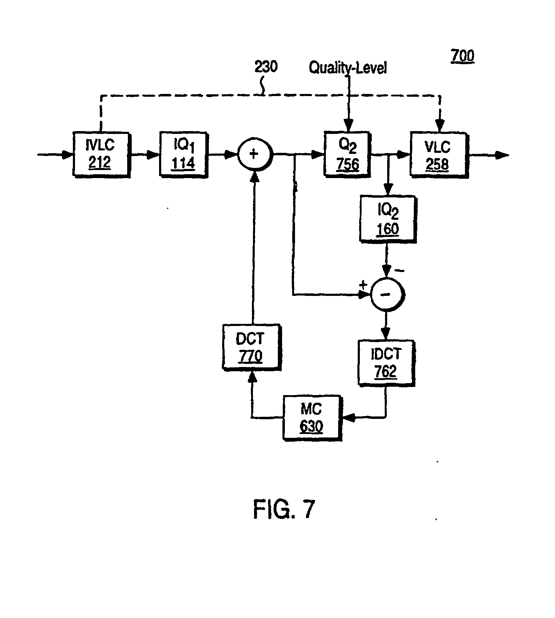

An alternative shared motion compensator reencoder system 700 is illustrated in Figure 7. The reencoder system 700 has been further modified by performing the prediction subtraction in the DCT domain instead of in the pixel domain. This structure is derived from the reencoder implementation of Figure 6. As in the previous implementation, the pixel errors are stored in the frame memories of the motion compensator, although in this case, only one IDCT 762 is required instead of two.

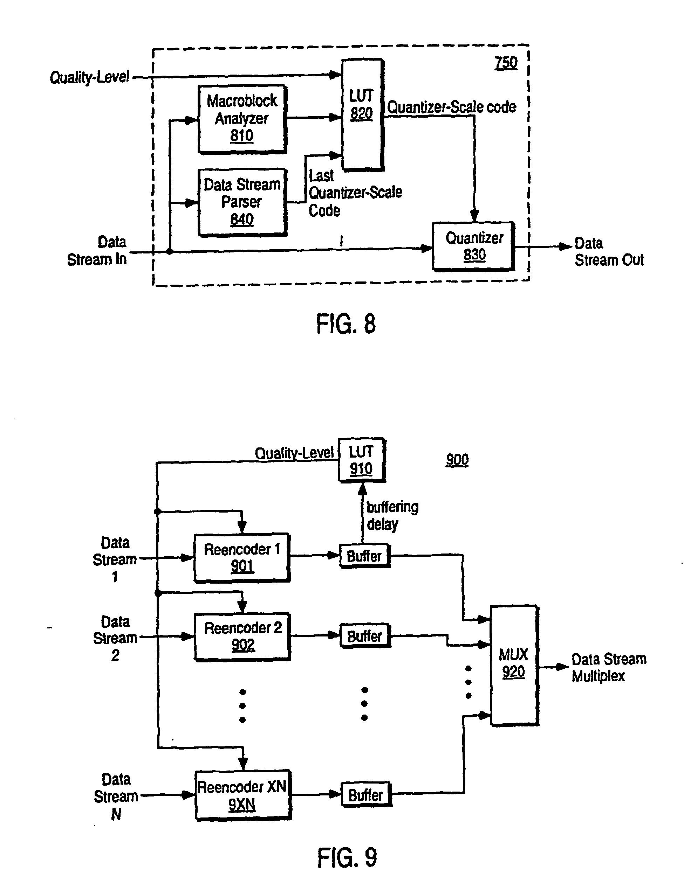

The shared motion compensator reencoder system 700 shown in Figure 7, illustrates that the quantizer $Q_2$ 756 can accept an external quality-level parameter to control the accuracy of the video signal after reconstruction. In one implementation, the process of re-quantizing the reconstructed DCT coefficients is performed based on a constant picture quality criterion, and in this case, the quality-level parameter remains fixed or changes only slightly during the entire reencoding process. However, in some applications it is more important that the output data rate remain constant. In such cases, the quality-level parameter can be adjusted as needed to insure that this output data rate is maintained. As will be described below with respect to Figure 8, the quality-level parameter affects the resulting perceived image quality, which is subjective in nature, but may not have a one-to-one correspondence with the resulting accuracy of the reproduction.

One method for implementing a quantizer that delivers a specified level of picture quality is shown in Figure 8. Typically, an MPEG quantizer accepts a parameter, referred to herein as the quantizer-scale code. The quantizer 830 maps the quantizer-scale code to a scaling factor which is used as an input to a multiplier acting upon the incoming stream of DCT coefficients. The quantizer-scale code could be derived directly from the input quality-level parameter, but this would not account for the viewer's variation in perceptual sensitivity to different types of scenes. For example, during complex moving scenes, a viewer is less likely to notice quantization errors than in simple scenes with very little movement. Therefore, it is advantageous to permit relatively large quantization errors in the complex moving regions of a picture and relatively small quantization errors in the simpler, stationary regions. The Macroblock Analyzer 810 shown in Figure 8 identifies such complex and simple regions and outputs a signal that is indicative of the region's error masking qualities. In a typical MPEG implementation, the regions would be defined by non-overlapping blocks of 16 x 16 pixels, also referred to as macroblocks. There are numerous systems known in the art for analyzing the complexity and other characteristics of an incoming data stream and determining an acceptable quantizer-scale code to provide to a standard MPEG quantizer. Accordingly, the details for such an implementation are not discussed in detail herein.

Frequently, the ideal quantizer-scale code that would normally be derived from the quality-level parameter received as an input to the quantizer, and the scene complexity indicator received from the Macroblock Analyzer 810, would be similar, but not identical to the quantizer-scale code used during the most recent encoding process. In such cases, it is advantageous to use the same quantizer-scale code as used during the last encoding process since this will minimize the build-up of quantization errors which normally occurs when multiple encoding processes are applied. Likewise, using a quantizer-scale code that is an integer multiple of the one used during the original encoding process will also minimize the build-up of quantization errors. The previous quantizer-scale code can be easily extracted from the input data stream by Data Stream Parser 840. The Look-Up Table (LUT) 820 then assigns a new quantizer-scale code based on the quality level parameter received as input to the quantizer, the scene complexity indicator received from the Macroblock Analyzer 810, and the last quantizer-scale code received from Data Stream Parser 840. The quantization is then performed in a conventional manner by the Quantizer 830 using the new quantizer-scale code received from LUT 820.

In correcting the data rate by adjusting the quantizer-scale code, it is advantageous in one embodiment to begin by editing just the B-frames. Because B-frames are never used for predicting other frames, any errors introduced by changing the quantization for B-frames will not be propogated to other frames. If editing just B-frames does not sufficiently correct the data rate, then P-frames should be edited next, resorting to editing I-frames only if that still proves insufficient.

It is possible to implement a statistical multiplexing system using multiple reencoders such as those described with respect to Figures 2, 6 and 7. This is particularly advantageous when no feedback is possible between the multiplexer and the encoders, as is the case when some or all of the programs are pre-encoded or encoded in a remote location that is inaccessible to the multiplexer. An example of such a statistical multiplexing system 900 is shown in Figure 9. Each of the xN reencoders 901-9xN regenerates a corresponding bit stream using a quality-level parameter derived by a device which monitors the level of fullness of the reencoder output buffers. In this example, the device is a Look-Up Table (LUT) 910 which monitors the time duration corresponding to the data in one of the xN output buffers. It is assumed in this case that the multiplexing is based on an algorithm which selects the next packet from one of the N output buffers based on the order in which the packets are to be decoded. When such an algorithm is used, each buffer will tend to contain an amount of data corresponding to the same time interval, and therefore only one of the xN buffers will need to be monitored. An example of such a statistical multiplexer system is described in a co-pending application entitled "Method and Apparatus for Multiplexing Video Programs for Improved Channel Utilization" Serial Number 08/560,219, filed 11/21/95, assigned to the assignee of the present invention, and published under e.g. WO-A-97 19561.

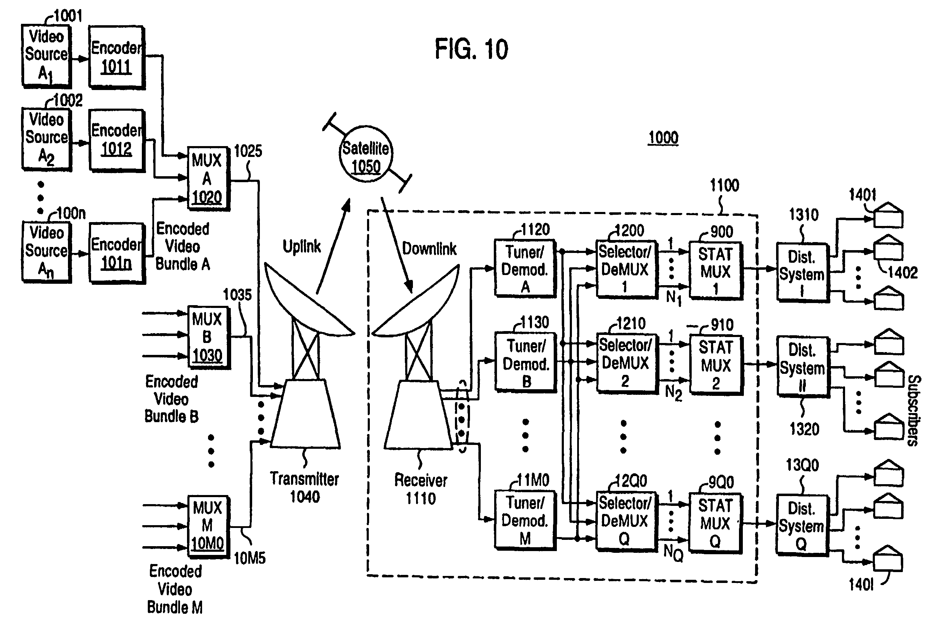

Figure 10 illustrates one embodiment of a complete system architecture for a compressed video distribution system in which the reencoder-based statistical multiplexer of Figure 9 may be implemented. In this system, a number of video program sources (only one subset of one subset are shown) are each encoded with a desirable video compression standard. The video sources $A_1$ to $A_N$ 1001-100n may be videocassette or laser disk players playing different programs, or the same program with different start times. Each program is respectively encoded by video encoders 1011, 1012 to 101n. The outputs of the video encoder systems are combined by a first multiplexer 1020 to generate a first multiplex stream 1025 of encoded video programs. There can be numerous bundles of encoded video programs, each being multiplexed respectively by compressed video multiplexers 1020, 1030 to 10M0 to generate compressed video multiplexes 1025, 1035 to 10M5, respectively.

The compressed video program multiplexes 1025-10M5 may then be forwarded to a satellite transmitter system 1040 and uplinked to a satellite 1050 for redistribution. In one embodiment of the distribution system, each multiplex 1025, 1035 to 10M5, would be uplinked to a difference transponder of the satellite 1050. The satellite 1050 downlinks the compressed video multiplexes to any of a plurality of distribution head- end systems such as the head-end system 1100. The head- end systems such as the head-end system 1100 may be widely distributed within the downlink range of the satellite 1050.

The exemplary head-end system 1100 includes a satellite receiver 1110 for receiving the downlink signals from one or more transponders of the satellite 1050. The downlink signals are then provided to the various tuner/demodulators 1120, 1130 to 11M0. These tuner/demodulators recover the multiplexes of compressed video programs from the modulated signals carried by the one or more transponders of satellite 1050 and provide the multiplexes to selector/demultiplexers 1200, 1210 to 12Q0. The selector/demultiplexers 1200, 1210 to 12Q0 are responsible for demultiplexing any number or combination of selected video programs from the various multiplexes received from tuner/demodulators 1120, 1130 to 11M0. The demultiplexed, previously encoded and compressed video programs 1 to $N_i$

are provided to statistical multiplexers 900, 910 to 9Q0, such as the one described above with respect to Figure 9. The statistical multiplexers combine the desired video programs into statistically multiplexed data streams for distribution through various distribution systems 1310, 1320 to 13Q0. Each of these distribution systems may carry different combinations of statistically multiplexed video program streams selected from the originally encoded video sources. These may then be selectively distributed to subscribers 1401 to 140I (I may, of course, be greater than 9) who each will have a video program decoder suitable for decoding the compressed video information by the standard used for encoding the data, such as the MPEG decoders described above.

In the head-end system 1100, there is incorporated the statistical multiplexing system 900, such as the one described with respect to Figure 9. As noted above, the statistical multiplexer system 900 may advantageously incorporate numerous of the shared motion compensator reencoder systems of the present invention to reduce the complexity and cost of such as statistical multiplexing system. Thus, the shared motion compensator systems described with respect to Figures 2, 6 and 7 are advantageously incorporated into a complete compressed video distribution system.

**Implementing a Single, Shared Motion Compensator**

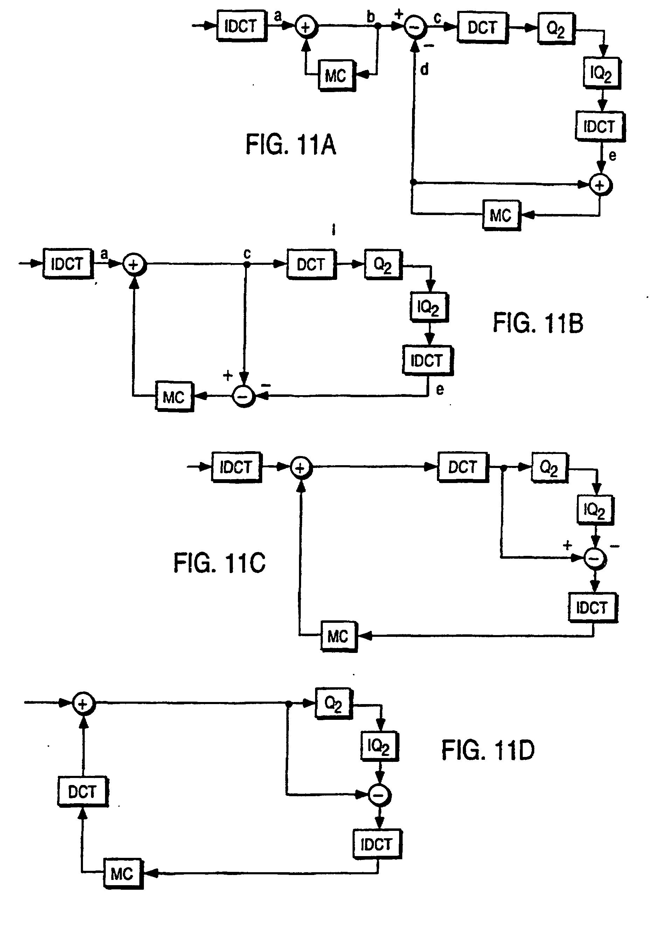

The following, with reference to Figures 11A-11D, demonstrates the effectiveness of the single, shared motion compensator architecture of the present invention.

A portion of Figure 2 is reproduced in Figure 11A with labels *a* through *e* attached to key points. It is useful to express the signals occurring at points *b*, *c*, and *d* in mathematical terms:

$$(1) \quad b = a + MC(b)$$

$$(2) \quad c = b - d$$

$$(3) \quad d = MC(d + e)$$

where MC() is the motion compensation operator, implemented by delaying the input signal by one frame interval and spatially rearranging the pixels of that frame according to a given set of motion vectors. In this case, the motion compensators in (1) and (3) use the same set of motion vectors and therefore both MC operations are identical. Substituting (1) and (3) into (2) yields:

$$(4) \quad c = a + MC(b) - MC (d + e).$$

Since the motion vectors are the same, the motion compensator is a linear function and therefore:

$$(5) \quad c = a + MC(b - d - e).$$

If (2) is substituted into (5) then:

$$(6) \quad c = a + MC(c - e).$$

Therefore this result can be realized using the structure shown in Figure 11B and it may be concluded that this structure is functionally equivalent to the one depicted in Figure 11A when the signal is observed at point C or at any other point between point C and point E. On this basis, it may also be concluded that the structures shown in Figure 2 and Figure 6 are also functionally equivalent when compared at their respective outputs.

The same result could also be realized using the structure shown in Figure 11C, which was derived from Figure 11B. In this case, the subtraction is performed in the DCT domain instead of in the pixel domain.

To further simplify Figure 11C the adder is moved from the output to the input of the IDCT. This can be done simply by inserting an additional DCT at the output of the motion compensator. Then, however, the series IDCT and DCT at the output of the adder negate each other and therefore both blocks can be eliminated, as shown in Figure 11D. This resulting structure is now identical to the one shown in Figure 7.

There has thus been described an advantageously-implemented method and apparatus for a compressed video reencoder system which uses only a single shared motion compensator. Such a shared motion compensator system may be advantageously incorporated into a complete system architecture for a compressed video distribution system. Although the present invention has been described with respect to certain exemplary and implemented embodiments, it should be understood that those of ordinary skill in the art will readily appreciate various alternatives to the present invention. Accordingly, the scope of the present invention should be measured by the terms of the claims which follow.

## Claims

1. A compressed-video head-end distribution system (1100) for use in a satellite video distribution system comprising:

   a satellite receiver (1110) for receiving downlink signals from transponders of a satellite;
   a plurality of tuner/demodulators (11M0) coupled to receive the downlink signals from the satellite receiver for recovering multiplexes of compressed-video programs from modulated signals carried by one or more transponders of a satellite;
   a plurality of selector/demultiplexers (12Q0) each coupled to each of said tuner/demodulators and each for selectively demultiplexing and outputting a selected combination (1...N1; ..., 1...NQ) of video programs from said multiplexes; and
   at least one statistical multiplexer (900;..;9Q0) for combining desired video programs a said selected combination from said multiplexes outputted by the respective one of said selector/demultiplexers into a respective statistically multiplexed data stream for distribution,
      wherein
      said statistical multiplexer includes a plurality of compressed-video reencoders each for variably modifying a said desired video program having a compressed data stream at a first compression ratio to a reencoded data stream at a second compression ratio, and wherein in said statistical multiplexer the data rate of one or more of said compressed data streams received at a first compression ratio is reduced or adjusted at said reencoding in order to avoid exceeding a predetermined channel bandwidth for a said statistically multiplexed data stream, or in order to deliver constant picture quality.

2. The compressed-video head-end distribution system of claim 1 wherein each of said compressed-video reencoders comprises decoding circuitry, encoding circuitry and a single shared motion compensator (MC;630) for providing motion compensation for both decoding and encoding circuitries.

3. The compressed-video head-end distribution system of claim 2 wherein each of said compressed-video reencoders comprise decoding circuitry, encoding circuitry, and a data forwarding path (230) for forwarding static information from said decoding circuitry to said encoding circuitry.

## Patentansprüche

1. Kopfende-Verteilsystem (1100) für komprimierte Videosignale zur Verwendung in einem Satelliten-Videoverteilsystem, das umfasst:

   - einen Satellitenempfänger (1110) zum Empfangen von Downlinksignalen von Transpondern eines Satelliten;
   - eine Vielzahl von Tuner/Demodulatoren (11M0), die zum Empfang der Downlinksignale von dem Satellitenempfänger angeschlossen sind, um aus von einem oder mehr Transpondern eines Satelliten übertragenen modulierten Signalen Multiplexe komprimierter Videoprogramme wiederherzustellen;
   - eine Vielzahl von Selektor/Demultiplexem (12Q0), die jeweils an jeden der Tuner/Demodulatoren angeschlossen sind und jeweils eine ausgewählte Kombination (1...N1;...;1...NQ) von Videoprogrammen aus den Multiplexen selektiv entschachteln und ausgeben; und
   - zumindest einen statistischen Multiplexer (900;...;9Q0) zum Kombinieren gewünschter Videoprogramme einer solchen ausgewählten Kombination aus den von dem entsprechenden der Selektor/Demultiplexer ausgegebenen Multiplexen zu einem entsprechenden statistisch gebündelten Datenstrom zur Verteilung,

   wobei der statistische Multiplexer eine Vielzahl von Wiedercodiereinrichtungen für komprimierte Videosignale einschließt, um ein solches gewünschtes Videoprogramm mit einem komprimierten Datenstrom in einem ersten Komprimierungsverhältnis zu einem wiederverschlüsselten Datenstrom in einem zweiten Komprimierungsverhältnis variabel zu modifizieren, und wobei in dem statistischen Multiplexer die Datenrate eines oder mehr der mit einem ersten Komprimierungsverhältnis empfangenen komprimierten Datenströme bei der Wiederverschlüsselung reduziert oder angepasst wird, um die Überschreitung einer vorgegebenen Kanalbandbreite für einen solchen statistisch gebündelten Datenstrom zu vermeiden oder um eine konstante Bildqualität zu liefern.

2. Kopfende-Verteilsystem für komprimierte Videosignale nach Anspruch 1, wobei jede der Wiedercodiereinrichtungen für komprimierte Videosignale eine Decodierschaltung, eine Codierschaltung und einen einzigen gemeinsamen Bewegungsausgleicher (MC;630) umfasst, um sowohl für die Decodier- als auch die Codierschaltung eine Bewegungskompensation bereitzustellen.

3. Kopfende-Verteilsystem für komprimierte Videosignale nach Anspruch 2, wobei jede der Wiedercodiereinrichtungen für komprimierte Videosignale eine Decodierschaltung, eine Codierschaltung und einen Datenübermittlungsweg (230) zum Übermitteln statischer Informationen von der Decodierschaltung an die Codierschaltung umfasst.


## Revendications

1. Système de distribution terminal de vidéo comprimée (1100) pour une utilisation dans un système de distribution de vidéo par satellite, comprenant :

un récepteur de satellite (1110) pour recevoir les signaux de liaison descendante issus des transpondeurs d'un satellite ;
une pluralité de tuners/démodulateurs (11M0) couplés pour recevoir les signaux de liaison descendante issus du récepteur de satellite pour récupérer des multiplex de programmes de vidéo comprimée à partir des signaux modulés transportés par un ou plusieurs transpondeurs d'un satellite ;
une pluralité de sélecteurs/démultiplexeurs (12Q0), chacun étant couplé à chacun desdits tuners/démodulateurs, chacun servant à démultiplexer et sortir sélectivement une combinaison sélectionnée (1 ... N1 ; ... ; 1 ... NQ) de programmes vidéo à partir desdits multiplex ; et
au moins un multiplexeur statistique (900 ; ... ; 9Q0) pour combiner les programmes vidéo souhaités d'une dite combinaison sélectionnée issue desdits multiplex sortis par un élément respectif desdits sélecteurs/démultiplexeurs en un train de données statistiquement multiplexées respectif pour distribution,

dans lequel ledit multiplexeur statistique comprend une pluralité de ré-encodeurs de vidéo comprimée, chacun servant à modifier de manière variable un dit programme vidéo souhaité ayant un train de données comprimées à un premier taux de compression en un train de données ré-encodées à un deuxième taux de compression, et dans lequel, dans ledit multiplexeur statistique, la vitesse des données d'un ou plusieurs desdits trains de données comprimées reçus à un premier taux de compression est réduite ou ajustée lors dudit ré-encodage afin d'éviter de dépasser une largeur de bande de canal prédéterminée pour un dit train de données statistiquement multiplexées, ou afin de fournir une qualité d'image constante.

2. Système de distribution terminal de vidéo comprimée selon la revendication 1, dans lequel chacun desdits ré-encodeurs de vidéo comprimée comprend des circuits de décodage, des circuits d'encodage et un compensateur de mouvement simple partagé (MC ; 630) pour fournir la compensation de mouvement à la fois aux circuits de décodage et aux circuits d'encodage.

3. Système de distribution terminal de vidéo comprimée selon la revendication 2, dans lequel chacun desdits ré-encodeurs de vidéo comprimée comprend des circuits de décodage, des circuits d'encodage et un trajet de ré-acheminement de données (230) pour ré-acheminer les informations statiques desdits circuits de décodage vers lesdits circuits d'encodage.

FIG. 1

FIG. 2

IVLC Header
Forwarding Procedure
300

Forward = 1

Decode next codeword

Start code? — No

Yes

Slice header?
320 — No

Yes

Forward = 1? — No

Yes

Insert "end marker"
into header forward stream
340

Forward = 0

Forward = 1

Forward = 1? — No

Yes

Copy codword to
header forward stream
330

FIG. 3

15

VLC Header
Insertion Procedure
400

Read next codeword from
header forward stream
410

End marker?
420

No

Yes

Copy codeword to
output stream
430

Encode 1 frame of picture
data from primary stream
and write to output stream
440

FIG. 4

FIG. 5

FIG. 6

EP 0 893 027 B1

FIG. 7

FIG. 8

FIG. 9

FIG. 10

EP 0 893 027 B1

FIG. 11A

FIG. 11B

FIG. 11C

FIG. 11D